# EUROPEAN PATENT APPLICATION

(11) **EP 4 600 884 A1**
(43) Date of publication of application: **13.08.2025**
(21) Application number: 25155484.6
(22) Date of filing: 03.02.2025
(51) Int. Cl.: G06Q 20/06, G06Q 20/20, G06Q 20/22, G06Q 20/32, G06Q 20/38, G06Q 20/40

(54) **SETTLEMENT SYSTEM THAT SETTLES COMMUNITY CURRENCY AND LEGAL CURRENCY IN COMBINATION**

(30) Priority: 06.02.2024 JP 2024016597; 05.04.2024 JP 2024061633
(71) Applicant: Commune Co., Ltd., Chiba 2850012 (JP)
(72) Inventor: NISHIBE, Makoto, Hokkaido (JP); MAEDA, Satoshi, Fukushima (JP); SANUKI, Kota, Fukushima (JP); KANEKO, Tetsuji, Chiba, 2850012 (JP)
(74) Representative: Müller, Enno

(57) **Abstract**

To provide a settlement system that revitalizes economic activities in a community.

Provided is a settlement system including a settlement terminal, a settlement server, and a settlement authentication server, wherein the settlement server is further connected to a community-currency management server, the community-currency management server includes a member information saving device, a member-account transaction-history recording device, and a zero-sum checking device, the settlement terminal includes a settlement possibility inquiry device that sends a price paid in a legal currency and a consumption tax amount corresponding to the price, a transaction amount in a community currency, and identity verification information to the settlement server, a settlement making device, and a settlement-making-result notification device, and the settlement server computer includes an authentication requesting device that inquires a transaction amount of the legal currency to the settlement authentication server computer and inquires a transaction amount of the community currency to the community-currency management server computer, a settlement possibility replying device, and a transaction result processing device.

## Description

### Technical field

The present invention relates to a computer system that enables to make a settlement of a community currency as a currency used in a closed community and a legal currency as a currency issued by a national central bank such as Japanese Yen in Japan in combination in one business transaction.

### Background art

To date, a currency used in a closed community referred to as "regional currency" has been used in various forms. There has been a system that a regional currency is issued to people having participated in volunteer activities in order to revitalize community activities and volunteer activities, and the people having received such a regional currency can have meals at restaurants and do their shopping at shops within the relevant region using their received currency. There is a type of regional currency that is issued and used on the assumption that recipients thereof are residents in a predetermined local municipality; however, in view of the possibility of broadening the relevant community without setting any address-based limitations, in the present specification, the currency is referred to as "community currency".

Particularly, a type of currency referred to as "LETS (Local Exchange Trading System) currency", which is not under control of any central bank or government, is used to provide values or services within a region. This currency can facilitate adjustment of supply and demand in goods and services. This currency can facilitate growth of regional economies. Any consumption tax is not imposed in transfer and reception of the LETS currency.

Meanwhile, there is a system referred to as "point system". In various business types such as credit card companies, drugstore chain stores, and restaurant chain stores, points are issued according to the amount of consumption paid by customers in order to retain customers (to ensure repeat customers), and customers exchange their accumulated points to gifts or to a value equivalent to cash (accumulated points are used for discount). In this example, such a point system is used for discounting in order for private companies to increase their sales, so that this system does not involve a concept of separating the consumption of points from calculation of consumption tax and accumulated points are used without separating these points from consumption tax.

In Patent Literature 1, there is disclosed an electronic safe in an electronic currency system that stores therein a large number of recording units each having electronic currencies stored therein and makes transactions of the electronic currencies with a recording unit outside of the safe, wherein a control circuit, a power supply, and card readers/writers corresponding to the recording units are stored in interior of a main body part of the electronic safe.

There is disclosed an electronic safe in an electronic currency system in which the recording units are IC cards.

There is disclosed an electronic safe in an electronic currency system in which an internal device including a control circuit, a power supply, and a large number of card readers/writers stored in the interior of the main body part is drawable to a front side due to a drawing mechanism.

There is disclosed an electronic safe in an electronic currency system that stores therein a large number of IC cards each having electronic currencies stored therein and makes transactions of the electronic currencies with an IC card outside of the safe, wherein the electronic safe at least comprises a main body part and a front side door, a control circuit, a power supply, and a large number of IC card readers/writers are stored in interior of the main body part, an internal device including the control circuit, the power supply, and the large number of IC card readers/writers stored in the interior of the main body part is drawable to a front side due to a drawing mechanism, and insertion slots of the IC card readers/writers are arranged on both side faces or a top face of a drawing unit.

There is disclosed an electronic safe in an electronic currency system that counts number of accesses to each of the large number of IC cards, and the electronic safe comprises a display unit that, when the number of accesses reaches a predetermined number or approaches the predetermined number, displays a fact thereof.

There is disclosed an electronic safe in an electronic currency system, the electronic safe comprising an integrated display unit that displays operation states of the large number of IC cards on one face of the electronic safe.

There is disclosed an electronic safe in an electronic currency system wherein a main body case, a main body storing part, and a door are provided on the electronic safe, and the integrated display unit that displays operation states of the large number of IC cards is provided in the main body storing part.

There is disclosed an electronic safe in an electronic currency system wherein the control circuit controls accesses to the large number of IC cards so that numbers of accesses to respective ones of the IC cards are averaged.

There is disclosed an electronic safe in an electronic currency system, the electronic safe comprising a display device that displays a suggestion of maintenance and inspection on the electronic safe.

There is disclosed an electronic safe in an electronic currency system, the electronic safe comprising: a mechanism that, when the electronic safe is used while being stacked on another one or aligned with another one, automatically connects these electronic safes; and an interface for connection in interior of the electronic safe.

Further, in paragraph 0029, while there has been described that transaction charges for goods are paid in a distribution system including a large number of POS terminals and an electronic safe having a large number of IC cards stored in a center device 24, when it is a system in which only one credit machine is provided in a private shop or the like, by providing an IC card reader/writer for IC cards of customers on the credit machine and including an IC card owned by the shop in this credit machine, a payment using an electronic currency can be made between the IC card owned by the shop and IC cards of customers connected to the IC card owned by the shop via the IC card reader/writer. As described above, the electronic currency in the IC card owned by the shop can be credited to a bank account or can be converted to cash at a bank counter.

Patent Literature 2 discloses an electronic currency POS terminal device used for paying for a purchase using an IC card having an electronic currency stored therein, the electronic currency POS terminal device comprising: an IC card insertion slot in which a customer's IC card is inserted; an IC card reader/writer unit with respect to the IC card; a control circuit that makes transactions of an electronic currency between the electronic currency POS terminal device and a customer's IC card; and a receipt outlet.

Further, there is disclosed the electronic currency POS terminal device further comprising: an IC card insertion slot in which an IC card for a shop is inserted; and an IC card reader/writer unit with respect to the IC card.

Furthermore, there is disclosed the electronic currency POS terminal device comprising a display unit that displays a purchased amount in an integrated manner or an interface for connecting the electronic currency POS terminal device to an external display device.

There is disclosed the electronic currency POS terminal device comprising an interface for connecting the electronic currency POS terminal device to a barcode scanner, an existing POS terminal, and other devices in a POS system.

There is disclosed the electronic currency POS terminal device, wherein the IC card insertion slot in which the customer's IC card is inserted is arranged on a customer's side and the receipt outlet and the IC card insertion slot for a shop are arranged on a clerk's side.

There is disclosed the electronic currency POS terminal device, wherein upon reception of a signal formed of an electromagnetic wave from a small and lightweight personal identification number input remote controller, unlocking of the customer's IC card is performed so that it is possible to perform processing on an electronic currency stored in the customer's IC card.

There is disclosed the electronic currency POS terminal device, wherein an electronic currency stored in the IC card for a shop is transferred to an IC card in an electronic safe of a center device or is transferred to a bank account at a predetermined time or based on a command from an information control system.

Further, in paragraph 0017, there is described that a personal computer 32 and an IC card telephone device 34 in an end user system 3 can make transactions of an electronic currency between two IC cards by providing therein two sets of card readers/writers for two IC cards. There is described that, with this configuration, processing identical to, for example, a case of handling normal cash such as transferring an electronic currency in a husband's IC card to a wife's IC card can be performed.

Patent Literature 3 discloses an automatic vending machine comprising: an electronic money payment control unit that performs payment processing of an electronic money payment service; and an automatic vending machine main control unit that performs goods sales control in the automatic vending machine when the automatic vending machine main control unit is connected to the electronic money payment control unit and a payment by the electronic money payment control unit is completed, wherein a communication protocol between the electronic money payment control unit and the automatic vending machine main control unit performs communication processing by using each brand identification number of electronic money payment services equal to or less than a predetermined number of brands, and the electronic money payment control unit accepts usage of brands of electronic money payment services exceeding the predetermined number of brands, classifies the respective brands into predetermined classification categories equal to or less than the number of predetermined brands, and performs communication processing with the automatic vending machine main control unit while setting each group number of classified groups as a dummy brand identification number corresponding to the brand identification number.

Further, there is disclosed the automatic vending machine wherein the group number is different from the brand identification number and has a digit number same as that of the brand identification number.

Further, there is disclosed the automatic vending machine wherein number of the groups includes one.

Furthermore, there is disclosed the automatic vending machine wherein each of the predetermined classification categories is any of a discount price of each brand, an upper classification of the electronic money payment service, and a payment type of the electronic money payment service.

Patent Literature 4 discloses a virtual currency management method in which a computer system provided with a first storage unit that stores therein a virtual currency savings amount of each user identifier and a second storage unit that stores therein an identification number of each banknote and an identifier indicating whether data of the banknote is already used in a pair
checks, when a user identifier and an identification number of a banknote are sent via online, whether a pseudo currency corresponding to the identification number is already used with reference to the second storage unit,
performs a process of adding, when the pseudo currency is not already used, an amount of a pseudo currency corresponding to the identification number to a savings amount of the user identifier stored in the first storage unit and causing an identifier that makes a pair with a relevant virtual banknote identification number in the second storage unit to be an identifier indicating that the pseudo currency is already used, and performs a process of inquiring whether the virtual banknote identification number stored in the second storage unit is already used when a virtual banknote identification number is sent from a shop terminal and transmitting an inquiry result thereof to the shop terminal.

Further, there is disclosed a virtual currency management method in which a computer system provided with a first storage unit that stores therein a virtual currency savings amount of each user identifier and a second storage unit that stores therein an identification number of each banknote and an identifier indicating whether data of the banknote is already used in a pair
performs a process of inquiring whether a virtual banknote identification number stored in the second storage unit is already used when a virtual banknote identification number is sent from a shop terminal and transmitting an inquiry result thereof to the shop terminal,
performs a process of adding, when the virtual banknote identification number is not already used, an amount of a pseudo currency corresponding to the identification number to a savings amount of the user identifier stored in the first storage unit and causing an identifier that makes a pair with the virtual banknote identification number in the second storage unit to be an identifier indicating that the virtual banknote identification number is already used,
checks, when a user identifier and an identification number of a banknote are sent via online, whether a pseudo currency corresponding to the identification number is already used with reference to the second storage unit, and
performs a process of adding, when the pseudo currency is not already used, an amount of a pseudo currency corresponding to the identification number to a savings amount of the user identifier stored in the first storage unit and causing an identifier that makes a pair with the virtual banknote identification number in the second storage unit to be an identifier indicating that the pseudo currency is already used.

Further, there is disclosed the virtual currency management method, wherein the computer system includes a banknote image storage unit having banknote images stored therein, and
when a banknote issuing request including number of banknotes to be issued is sent via online, the computer system adds identification numbers of respective banknotes of a requested issuance number to the second storage unit.

There is disclosed the virtual currency management method, wherein the computer system includes a banknote image storage unit having banknote images stored therein, and
when adding identification numbers of respective banknotes, the computer system generates banknote image information for print based on the banknote images stored in the banknote image storage unit, and transmits the banknote image information to a request destination.

Further, there is disclosed a virtual currency management system provided with
a first storage unit that stores therein a virtual currency savings amount of each user identifier,
a second storage unit that stores therein an identification number of each banknote and an identifier indicating whether data of the banknote is already used in a pair, and
a control unit that, when a user identifier and an identification number of a banknote are sent via online, performs a process of checking whether a pseudo currency corresponding to the identification number is already used with reference to the second storage unit, adding, when the pseudo currency is not already used, an amount of a pseudo currency corresponding to the identification number to a savings amount of the user identifier stored in the first storage unit, and causing an identifier that makes a pair with the virtual banknote identification number in the second storage unit to be an identifier indicating that the pseudo currency is already used, and performs a process of inquiring whether the virtual banknote identification number stored in the second storage unit is already used when a virtual banknote identification number is sent from a shop terminal and transmitting an inquiry result thereof to the shop terminal.

### Citation List

### Patent Literatures

Patent Literature 1: Japanese Patent Application Laid-open No. H09-158569
Patent Literature 2: Japanese Patent Application Laid-open No. H09-161152
Patent Literature 3: Japanese Patent Application Laid-open No. 2021-026513
Patent Literature 4: Japanese Patent Application Laid-open No. 2004-258969

### Summary

### Technical Problem

As described above, there is a concept of community currency directed to revitalize community activities in a local municipality and the like and such a community currency has been operated in some regions throughout Japan. Meanwhile, there is a reality that point systems directed to increase sales of private companies are so prevalent. Transactions of the LETS currency have a role of revitalizing regional economies and have a significance that regional economies are revitalized as transactions not involving any consumption tax payment are repeated; however, as point systems of private companies are so prevalent, the advantages of the LETS currency are not utilized and there may occur a situation of "bad money drives out good money".

The inventors of the present invention believe that, by providing "a settlement system that settles a community currency and a legal currency in combination" with the following characteristics, revitalization of activities including economic activities in a community can be expected.

First, increasing situations using a community currency will lead to revitalization of community activities.

Second, enabling to use a community currency at the same time in places of business transactions using a legal currency.

Third, keeping the rule of not exchanging a community currency with a legal currency.

Fourth, drawing a line between community currencies and point systems issued by companies.

The present invention provides "a settlement system that settles a community currency and a legal currency in combination".

### Solution to Problem

As a result of earnest researches in view of the above problem to solve, the present inventors have reached an invention of a solving method thereof as described in the following embodiment.

To illustrate the summery of the invention, a community currency is not exchanged with a legal currency (cash, a credit card, a prepaid card, electronic money, barcode payment, point payment, on-credit payment, and the like). Recharging in cash, advance payment, cashing, and the like are not made at all. The account of each individual as a community member may have a negative value.

A community currency is used as a "discount right" in places of business transactions using a legal currency.

This discount is handled as a discount with respect to a price (base price) excluding consumption tax. Transactions of a community currency is not taxable as for consumption tax.

A community currency can be exchanged between members belonging to a relevant community.

The community currency sum of retained amounts of all the constituent members in a relevant community is always "zero".

Specific descriptions of this settlement system are as follows.

A settlement system comprising: a settlement terminal installed in a shop of a goods seller or a service provider; a settlement server computer of a settlement service provider connected to the settlement terminal via a communication unit between shop-settlement service providers; and a settlement authentication server computer of a financial institution connected to the settlement server computer via a communication unit between a settlement service provider and a financial institution, where the financial institution includes a credit card company, a debit card company, a prepaid card company, an electronic money company, a code-settlement application management company, a point management company, and an on-credit payment management company, and enabling to make a charge settlement of goods or services using a legal currency, wherein
the settlement server computer is further connected to a community-currency management server computer that manages a community currency that is used in a closed community and is not exchanged with a legal currency,
the community-currency management server computer includes
a member information saving device that saves therein member information enabling to specify members belonging to the closed community and necessary for identity verification,
a member-account transaction-history recording device that records therein a transaction amount and a balance history of a community currency owned by each individual of the members, and
a zero-sum checking device that calculates a sum of account balances of the community currency in a relevant community recorded in the member-account transaction-history recording device and checks that the sum is zero,
the settlement terminal includes
a settlement possibility inquiry device that, in a case where the goods seller or the service provider belongs to a community using a community currency same as that a customer uses and in a case where it is agreed that a portion of a base price excluding consumption tax in a charge for goods or services is paid using the community currency, sends a price among the base price paid in a legal currency and a consumption tax amount corresponding to the price, a community currency transaction amount paid using the community currency, and identity verification information necessary for verifying belongingness of the customer to the community to the settlement server computer so as to inquire possibility of a settlement,
a settlement making device that makes a settlement in a case where a response that it is possible to make a settlement is obtained from the server computer, and
a settlement-making-result notification device that sends a fact that a settlement has been made to the settlement server computer,
the settlement server computer includes
an authentication requesting device that, when there is an inquiry as to whether it is possible to make a settlement in which both a transaction of a legal currency and a transaction of a community currency are made in combination from the settlement possibility inquiry device of the settlement terminal, inquires a transaction amount of the legal currency to the settlement authentication server computer and inquires a transaction amount of the community currency to the community-currency management server computer,
a settlement possibility replying device that, in response to a request from the authentication requesting device, when both the settlement authentication server computer and the community-currency management server computer reply that it is possible to make a settlement, sends a reply that it is possible to make a settlement to the settlement terminal, and when any one of the settlement authentication server computer and the community-currency management server computer replies that it is not possible to make a settlement, sends a reply that it is not possible to make a settlement to the settlement terminal, and
a transaction result processing device that, upon reception of a fact that a settlement has been made from the settlement-making-result notification device of the settlement terminal, sends information including an amount of a relevant transaction to the settlement authentication server computer and the community-currency management server computer, and
the settlement server computer enables to make a settlement in one transaction while combining a community currency and a legal currency with each other.

Accordingly, it is possible to revitalize distribution of community currencies as it is independent of distribution of legal currencies.

A settlement system in which the community-currency management server computer further includes
a transaction-amount-balance upper-limit monitoring device that monitors an upper limit of a transaction amount in one transaction or a lower limit and an upper limit of a balance in each account, and
when the authentication requesting device of the settlement server computer inquires the community-currency management server computer about a transaction of the community currency, the community-currency management server computer checks and replies not only identity verification of a customer but also whether the transaction reaches an upper limit of a transaction amount or of an account balance.

Accordingly, it is possible to avoid imposing a large burden on certain members.

A settlement system in which the settlement terminal is a settlement terminal as a dedicated product,
the settlement terminal further includes a facial recognition camera or an information-embedded graphics reading camera, and
the settlement terminal captures a face of a customer with the facial recognition camera or captures information-embedded graphics for identifying identity of the customer with the information-embedded graphics reading camera, regards captured information as identity verification information, and sends the identity verification information to the settlement server computer.

Accordingly, it is possible to prevent unauthorized usage.

A settlement system in which the settlement terminal is a smartphone installed in a shop of the goods seller or the service provider and having installed therein an application program enabling to make both a transaction of a community currency and a transaction of a legal currency, and
the settlement terminal uses a camera incorporated in the smartphone to capture a face of a customer or information-embedded graphics for identifying identity of the customer, regards captured information as identity verification information, and sends the identity verification information to the settlement server computer.

Accordingly, it is possible to operate this settlement system without providing any settlement terminal as a dedicated product.

A settlement system in which the settlement terminal is a smartphone of a customer having installed therein an application program enabling to make both a transaction of a community currency and a transaction of a legal currency, and
the settlement terminal uses a camera incorporated in the smartphone to capture information-embedded graphics for identifying a shop of the goods seller or the service provider, regards captured information as identity verification information, and sends the identity verification information to the settlement server computer.

Accordingly, it is possible to operate this settlement system even when there is no settlement terminal in the shop.

A settlement system in which the settlement terminal is a smartphone of a customer having installed therein an application program enabling to make a transaction of a community currency and also having installed therein an application program enabling to make a transaction of a legal currency, and
the settlement terminal uses a camera incorporated in the smartphone to capture information-embedded graphics for identifying a shop of the goods seller or the service provider, regards captured information as identity verification information, and sends the identity verification information to the settlement server computer.

Accordingly, it is possible to operate this settlement system even when the server on a settlement service provider is an existing one.

A settlement system in which the zero-sum checking device of the community-currency management server computer calculates a sum of account balances at a constant cycle to check that the sum is zero, and when the sum is not zero, detects a transaction as a cause thereof, notifies a settlement server computer involved in the transaction of a fact that the sum is not zero, and requests a correction of the transaction.

Accordingly, it is possible to maintain the zero sum of a community currency.

A settlement system in which it is possible for members belonging to the community to download and install an account application program for checking a balance and a transaction history of a community currency owned by each individual in each individual's smartphone, and it is possible to perform transfer and reception of a community currency between the members using a relevant application.

Accordingly, it is possible to perform transfer and reception of the community currency between individuals.

A settlement system in which
the community-currency management server computer further includes a community-currency visualization device that recognizes a flow of a relevant community currency and visualizes the flow, and
as to between which members the community currency is often flowing to and from is made visible at first sight by the community-currency visualization device.

Accordingly, it is possible to visualize revitalization of regional economies.

### Advantageous Effects of Invention

As described above, according to the present invention, it is possible to provide a settlement system that can contribute to economic revitalization with effects of distribution of a community currency that is independent of distribution of a legal currency.

### Brief Description of Drawings

Fig. 1 is a diagram illustrating a configuration of a settlement system according to the present invention.
Fig. 2 is a diagram illustrating an example of making a settlement using a legal currency (Japanese Yen) and a community currency (doumo) in combination for an item "coffee".
Fig. 3 is a diagram illustrating transactions in a case where a customer has a coffee as a settlement terminal (a dedicated settlement terminal) installed in a shop as a dedicated product is used to perform facial recognition on the customer.
Fig. 4 is a diagram illustrating transactions in a case where a customer has a coffee as a smartphone owned by a shop having a settlement application program installed therein is used to perform facial recognition on the customer.
Fig. 5 is a diagram illustrating transactions in a case where a customer has a coffee at a shop that has no portable terminal installed therein but has information embedded graphics, while the customer brings a smartphone having installed therein an application program capable of making a community currency (doumo) and a legal currency (Japanese Yen) linked and combined with each other to make transactions.
Fig. 6 is a diagram illustrating transactions in a case where a customer has a coffee at a shop that has no portable terminal installed therein but has information embedded graphics, while the customer brings a smartphone having installed therein a community currency application program and an electronic money application program.
Fig. 7 is a schematic diagram of a vector-currency demonstration system.
Fig. 8 is a diagram illustrating process procedures in a demonstration system.
Fig. 9 is a diagram illustrating QR code reading.
Fig. 10 is a diagram illustrating a registration at the time of starting to use a demonstration system.
Fig. 11 is a diagram illustrating a state of processing a transaction at a shop.

### Description of Embodiments

Best modes for carrying out a system of the present invention will be described below in detail.

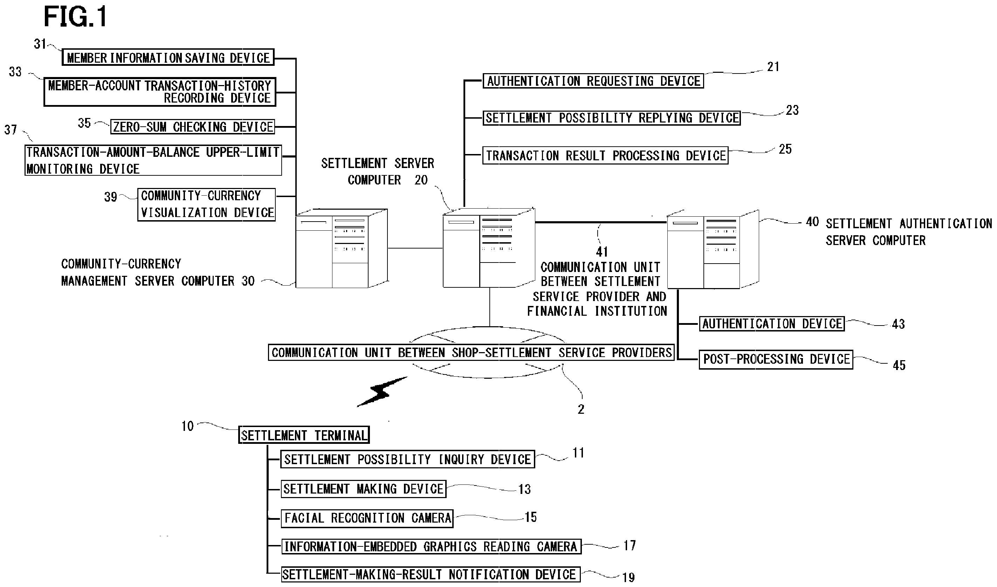

Fig. 1 is a diagram illustrating a configuration of a settlement system according to the present invention.

It is preferable that a settlement terminal 10 is a settlement terminal as a dedicated product and is a settlement terminal installed in a shop and having a facial recognition camera or an information-embedded graphics reading camera provided thereon. It is also permissible that, when there is no settlement terminal as a dedicated product in a shop, it is a system that a smartphone owned by a shop owner or a clerk has a settlement application program installed therein and the installed application program is used. Further, it is also permissible that, when there is no settlement terminal or smartphone in a shop, a customer's smartphone having an application program necessary for settlement installed therein is used to read shop-information embedded graphics with the customer's smartphone so as to make a settlement.

The settlement terminal 10 is connected to a settlement server computer 20 via a communication unit 2 between shop-settlement service providers. The communication unit 2 between shop-settlement service providers may use, for example, an Internet network.

The settlement terminal 10 includes a settlement possibility inquiry device 11 that inquires the settlement server computer 20 whether a settlement to establish a transaction between a customer at a shop and the shop can be made, a settlement making device 13 that makes a settlement in a case where a response that the settlement can be made is obtained, a facial recognition camera 15 that performs facial recognition to determine the legitimacy of a customer that he can use a community currency based on his belongingness to the relevant community or an information-embedded graphics reading camera 17 used for customers' personal authentication, and a settlement-making-result notification device 19 that notifies, when the settlement making device 13 has made a settlement, the settlement server computer 20 of the fact.

The settlement server computer 20 is a server computer of a settlement service provider and is a server computer that serves a role of mediating a settlement to be made by the settlement terminal between the settlement terminal 10 and a settlement authentication server computer 40 of a financial institution. The financial institution is a company handling credit cards, prepaid cards, electronic money, barcode payment, point payment, on-credit payment, and the like and is a company that manages and operates the settlement authentication server computer 40. In a case of cash transactions, while transactions handling a legal currency (Japanese Yen in Japan) are made between a shop and customers using banknotes and coins, when it is a case using a credit card, a prepaid card, electronic money, barcode payment, point payment, or on-credit payment, similarly to credit card authentication procedures, identity verification is made on a customer using such procedures and it is determined whether the amount to be settled is an amount approved for the customer in relation to the credit information of the individual. The settlement authentication server computer 40 of a financial institution makes this determination and the settlement server computer 20 of a settlement service provider and the settlement authentication server computer 40 of a financial institution are connected to each other via a dedicated cable, for example. The dedicated cable is marked "communication unit between settlement service provider and financial institution 41" in Figure 1.

The settlement authentication server computer 40 includes an authentication device 43 that authenticates relevant transactions in response to an inquiry from the settlement server computer 20 and a post-processing device 45 that performs processing after transactions are made.

The settlement server computer 20 includes an authentication requesting device 21 that issues an authentication request to the settlement authentication server computer 40 in response to a request from the settlement terminal 10, a settlement possibility replying device 23 that replies settlement possibility to the settlement terminal 10, and a transaction result processing device 25 that, when the settlement terminal 10 makes a settlement in response to the reply and returns the fact to the settlement server computer 20, performs processing thereafter.

The configuration described above is sufficient enough if only transactions using a legal currency are made; however, in a case of using a community currency at the same time, it is necessary to connect a community-currency management server computer 30 to the settlement server computer 20. This connection is realized by connecting these computers to each other via a dedicated line, for example.

The community-currency management server computer 30 includes a member information saving device 31 that saves therein information of members belonging to a relevant community including information necessary for identity verification, a member-account transaction-history recording device 33 that records therein a transaction history and a balance history of an account each member owns, a zero-sum checking device 35 that checks whether the sum of member's account balances of all members is zero, a transaction-amount-balance upper-limit monitoring device 37 that monitors the extent of transaction amount and the amount of balance of each member and, when there is an upper limit set in advance, does not allow the transaction amount and the amount of balance to exceed the upper limit, and a community-currency visualization device 39 that visualizes from which individual to another individual and how much a community currency is shifting between them by mapping the shifting.

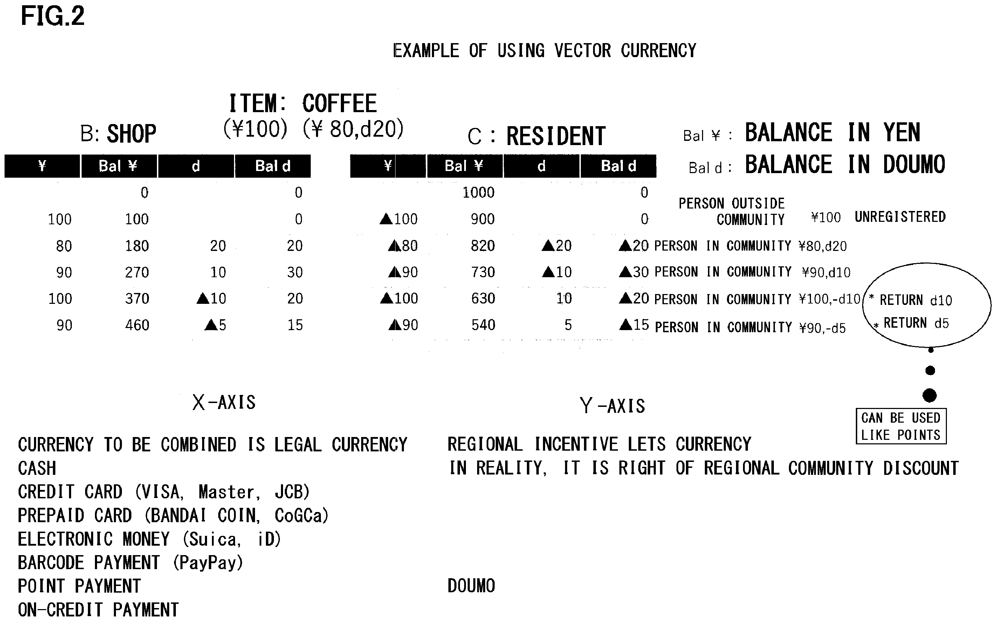

Fig. 2 is a diagram illustrating an example of making a settlement using a legal currency (Japanese Yen) and a community currency (doumo) in combination for an item "coffee". In this example, the legal currency is Japanese Yen and the community currency is assumed to have a name "doumo", where its abbreviation is "d". In Fig. 2, "Bal" represents a balance and "Y" and "d" respectively represent an amount having been shifted due to transactions. Transactions between a shop B and a resident C are described.

In the first state (the first row in Fig. 2), the shop has a balance of zero Yen and a balance of zero in doumo. The resident C has a balance of 1,000 Yen and a balance of zero in doumo.

In the second row, the resident C does not belong to a community using a community currency yet. Therefore, when he purchases a 100-yen coffee, his balance is decreased to 900 Yen. In Fig. 2, consumption tax is not considered.

In the third row, both the shop and the resident C belong to a community using a community currency. A 100-yen coffee is sold to individuals belonging to the community in a combination of 80 Japanese Yen and 20 points in doumo. Accordingly, in the third row, the shop has its yen increased by 80 yen and has a balance of 180 Yen and has a balance of 20 points in doumo. Since the resident C has consumed 80 Yen and 20 points in doumo, he has his balance in Yen decreased by 80 Yen and his balance in doumo decreased by 20 points. In Fig. 2, "A" represents a negative value.

In the fourth row, a 100-yen coffee is sold in a combination of 90 Japanese Yen and 10 points in doumo. The community currency doumo functions as a discount right, so that as to how much of the discount right is exercised may be changed in each transaction.

In the fifth row, the shop sells a 100-yen coffee for 100 Yen and a discount is made by returning 10 points in doumo to customers. At this time, the resident C has his balance in doumo increased by 10 points.

In the sixth row, the shop makes a transaction in which a 100-yen coffee is sold for 90 Yen and 5 points in doumo are returned to customers. At this time, the resident C has his balance in doumo increased by 5 points.

The significance of arranging a legal currency on the X-axis and a community currency on the Y-axis in Fig. 2 to handle them as a vector currency is established since the community currency cannot be exchanged for the legal currency. While community currencies enable a discount of goods or services to be provided, community currencies only enable a discount on a base price excluding consumption tax to be provided and cannot be used for consumption tax payment. This is because consumption tax is paid in a legal currency. In this sense, community currencies draw a line from the point systems prevalent in society.

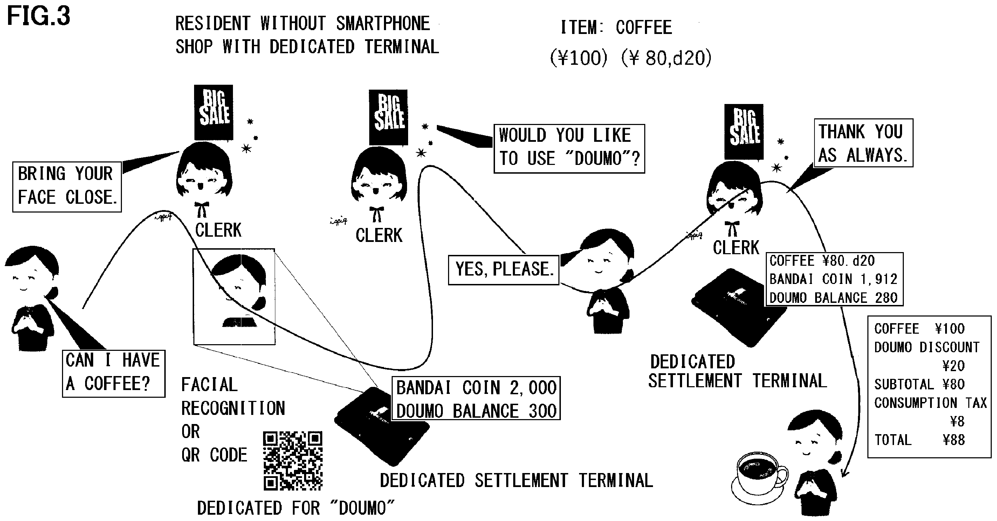

Fig. 3 is a diagram illustrating transactions in a case where a customer has a coffee as a settlement terminal installed in a shop as a dedicated product is used to perform facial recognition on the customer.

In Fig. 3, the notation "doumo" is the community currency. In the example in Fig. 3, a resident can have a 100-yen coffee by paying 88 Yen as a legal currency and the community currency are used in combination although the customer does not have a smartphone. At this time, the customer pays 80 Yen for a base price of the coffee and 8 yen for the consumption tax therefor while using a discount of 20 points in doumo.

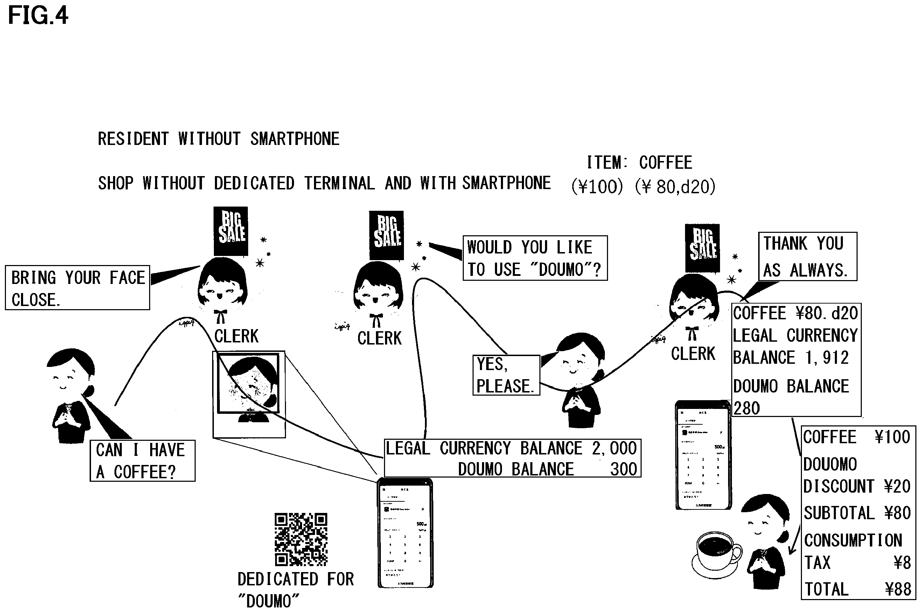

Fig. 4 is a diagram illustrating transactions in a case where a customer has a coffee as a smartphone owned by a shop having a settlement application program installed therein is used to perform facial recognition on the customer.

This is an example of implementing transactions similar to the transactions in Fig. 3 by using a smartphone owned by a shop rather than using a dedicated settlement terminal.

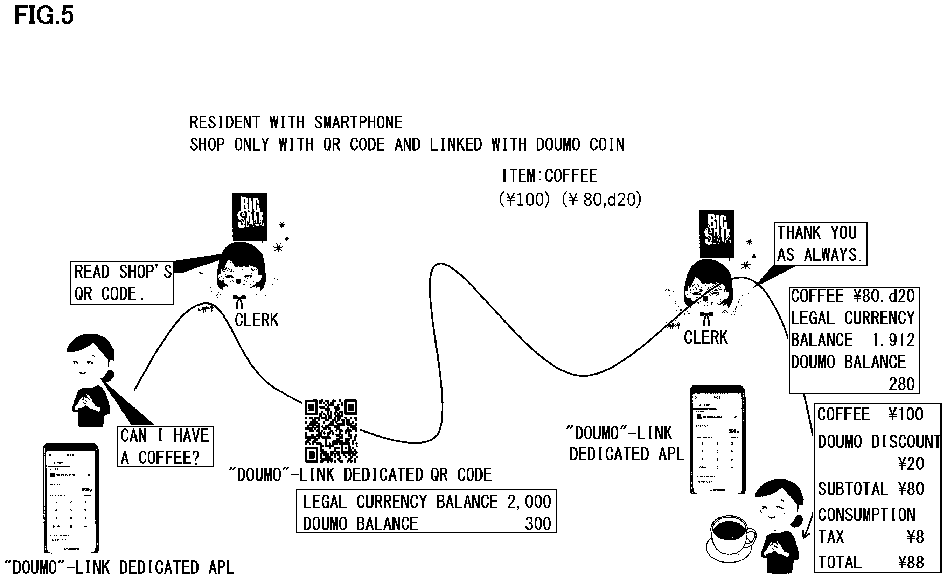

Fig. 5 is a diagram illustrating transactions in a case where a customer has a coffee at a shop that has no portable terminal installed therein but has information embedded graphics, while the customer brings a smartphone having installed therein an application program capable of making a community currency and electronic money linked and combined with each other to make transactions.

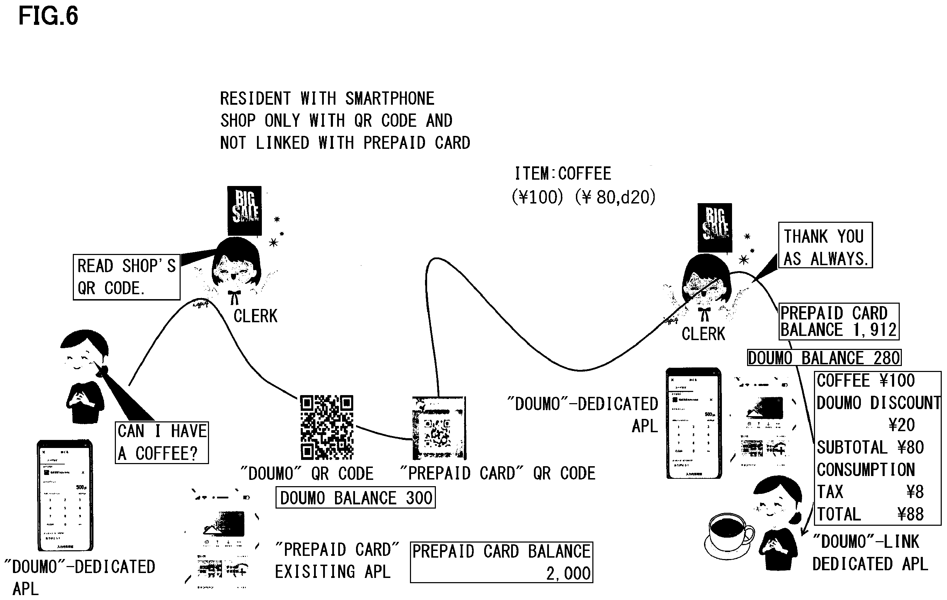

Fig. 6 is a diagram illustrating transactions in a case where a customer has a coffee at a shop that has no portable terminal installed therein but has information embedded graphics, while the customer brings a smartphone having installed therein a community currency application program and an electronic money application program.

This is an example in which a resident makes transactions similar to those described above by installing a doumo-link dedicated application using a doumo-link dedicated QR code.

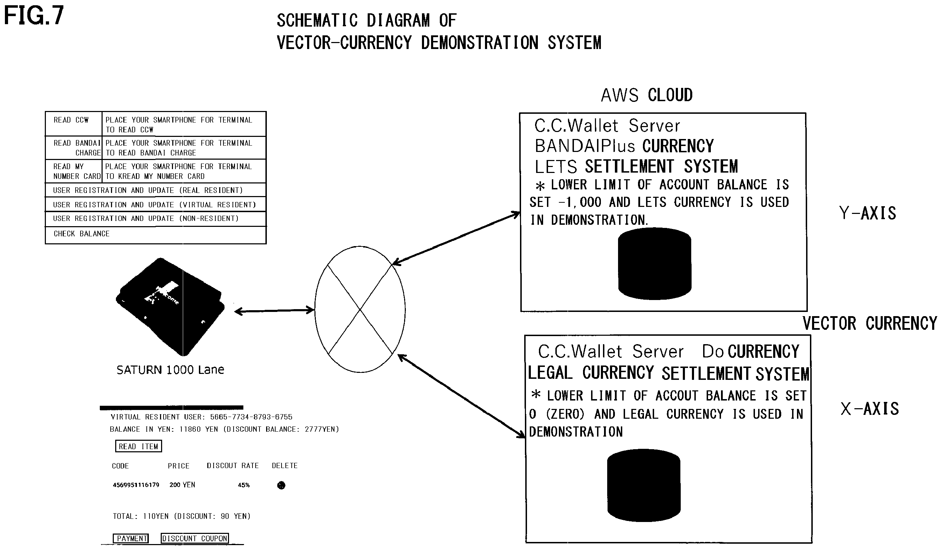

Fig. 7 is a schematic diagram of a vector-currency demonstration system.

There is provided two servers that are operated on the AWS cloud, which are a "LETS settlement system (community currency settlement system)" (Y-axis) and a "legal currency settlement system" (X-axis), a dedicated settlement terminal (in this example, SATURN 1000 Lane) is connected to the two servers via an Internet network illustrated in the center, and a virtual resident registration procedure is performed via the dedicated settlement terminal. Further, Fig. 7 illustrates an example of a transaction in which an item for 200 yen is sold at a 45% discount rate, that is, sold for 110 yen after a 90-yen discount.

Here, the community currency is set to have a lower limit of -1,000 yen in its account balance and it is the LETS currency. A community currency is a currency exchanged for an item value or a service value within a specific community and cannot be exchanged for a legal currency. Therefore, when a community currency is used at the time of paying for an item charge, the community currency functions as a discount for a price before consumption tax (pretax price) is added.

In the legal currency settlement system, the lower limit of its account balance is set to be zero. In this example, the legal currency is Japanese Yen.

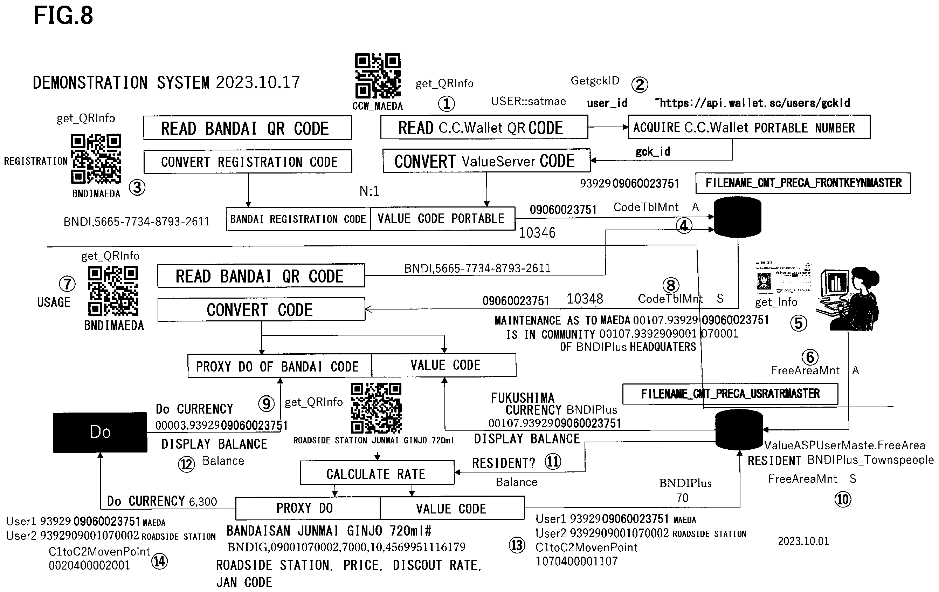

Fig. 8 is a diagram illustrating process procedures in a demonstration system. While signs of circled numbers are used in Figs. 8 to 11, in the present specification, descriptions are made as these signs are rephrased as numbers in parentheses.

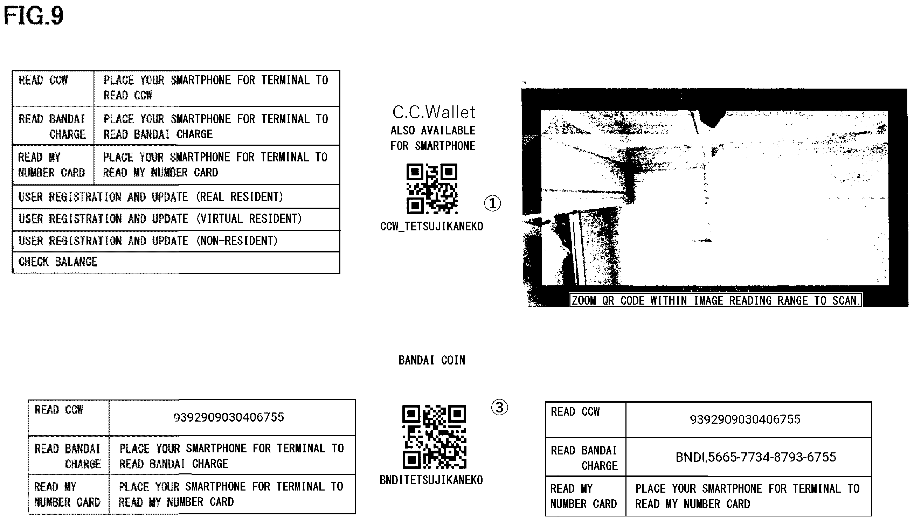

Fig. 8 is a comprehensive overview of the entire processes illustrated in Figs. 9, 10, and 11.

Fig. 9 is a diagram illustrating QR code reading. In Fig. 9, a system described as CCW or C.C.Wallet is a system that makes legal currency transactions as a smartphone and a server are combined with each other. First, a user registers a CCW (1). As illustrated in the upper-right of Fig. 9, a registration can be made by causing a camera to read and scan a QR code (registered trademark).

Further, the user causes the camera to read a QR code (registered trademark) in order to register a community currency (in this example, "Bandai Coin") (2).

Accordingly, a Bandai registration code and a Value code portable are linked to each other.

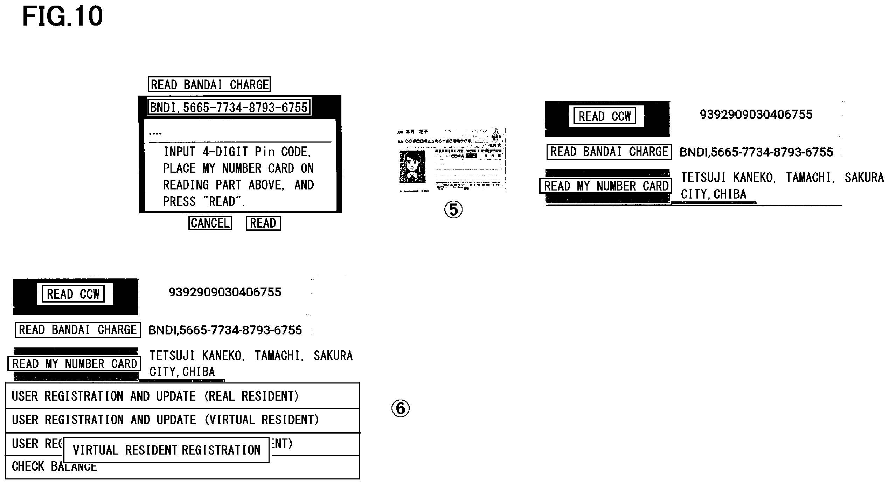

Fig. 10 is a diagram illustrating a registration at the time of starting to use the demonstration system. A My Number Card is scanned and read with a camera (5) and when the relevant community currency is for residents in a specific region, each resident is registered as "real resident registration" and an individual other than the residents in the region is registered as "virtual resident registration" (6).

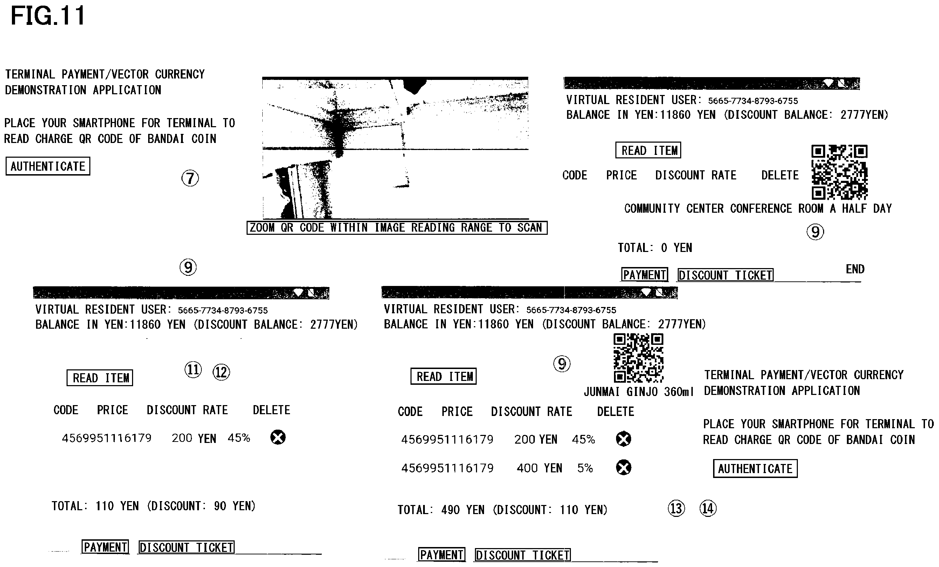

Fig. 11 is a diagram illustrating a state of processing transactions at a shop. A charge QR code (registered trademark) of Bandai Coin is read (7).

As a result of code conversion, a transaction settlement is made in a state where a proxy Do of Bandai Code and a Value code are linked to each other (9).

Upon reading an item, a discount rate having a possibility of differing depending on whether the user is a real resident or a virtual resident is read, and a code, a price, and a discount rate are displayed on a smartphone (or a settlement terminal) of the user (12). Thereafter, the user is caused to select whether to use a discount ticket and a payment is made. The result of this payment is reflected on account management (13) and balance display (14) .

While the settlement system according to the present invention has been described by presenting a specific embodiment, the present invention is not limited thereto. Persons skilled in the art will readily be able to add various modifications and improvements to the configurations and functions in the embodiment described above without departing from the scope of the present invention.

### Industrial Applicability

The system according to the present invention can be widely used for community currencies used in local municipalities such as prefectures and municipalities as well as for community currencies used in organizations such as a boy scout group, a girl scout group, a religious believer organization, an organization of qualified individuals having national qualification, private qualification, and the like, an entertainer's fan club, a hobby club, and an academic society organization.

### Reference Signs List

2 communication unit between shop-settlement service providers
10 settlement terminal
11 settlement possibility inquiry device
13 settlement making device
15 facial recognition camera
17 information-embedded graphics reading camera
19 settlement-making-result notification device
20 settlement server computer
21 authentication requesting device
23 settlement possibility replying device
25 transaction result processing device
30 community-currency management server computer
31 member information saving device
33 member-account transaction-history recording device
35 zero-sum checking device
37 transaction-amount-balance upper-limit monitoring device
39 community-currency visualization device
40 settlement authentication server computer
41 communication unit between settlement service provider and financial institution
43 authentication device
45 post-processing device

## Claims

1. A settlement system comprising: a settlement terminal installed in a shop of a goods seller or a service provider; a settlement server computer of a settlement service provider connected to the settlement terminal via a communication unit between shop-settlement service providers; and a settlement authentication server computer of a financial institution connected to the settlement server computer via a communication unit between a settlement service provider and a financial institution, where the financial institution includes a credit card company, a debit card company, a prepaid card company, an electronic money company, a code-settlement application management company, a point management company, and an on-credit payment management company, and enabling to make a charge settlement of goods or services using a legal currency, wherein
the settlement server computer is further connected to a community-currency management server computer that manages an account-type community currency that is used in a closed community, is not exchanged with a legal currency, and is not used for consumption tax payment,
the community-currency management server computer includes
a member information saving device that saves therein member information enabling to specify members belonging to the closed community and necessary for identity verification,
a member-account transaction-history recording device that records therein a transaction amount and a balance history of a community currency owned by each individual of the members, and
a zero-sum checking device that calculates a sum of account balances of the community currency in a relevant community recorded in the member-account transaction-history recording device and checks that the sum is zero,
the settlement terminal includes
a settlement possibility inquiry device that, in a case where the goods seller or the service provider belongs to a community using a community currency same as that a customer uses and in a case where it is agreed that a portion of a base price excluding consumption tax in a charge for goods or services is paid using the community currency, sends a price among the base price paid in a legal currency and a consumption tax amount corresponding to the price, a community currency transaction amount paid using the community currency, and identity verification information necessary for verifying belongingness of the customer to the community to the settlement server computer so as to inquire possibility of a settlement,
a settlement making device that makes a settlement in a case where a response that it is possible to make a settlement is obtained from the server computer, and
a settlement-making-result notification device that sends a fact that a settlement has been made to the settlement server computer,
the settlement server computer includes
an authentication requesting device that, when there is an inquiry as to whether it is possible to make a settlement in which both a transaction of a legal currency and a transaction of a community currency are made in combination from the settlement possibility inquiry device of the settlement terminal, inquires a transaction amount of the legal currency to the settlement authentication server computer and inquires a transaction amount of the community currency to the community-currency management server computer,
a settlement possibility replying device that, in response to a request from the authentication requesting device, when both the settlement authentication server computer and the community-currency management server computer reply that it is possible to make a settlement, sends a reply that it is possible to make a settlement to the settlement terminal, and when any one of the settlement authentication server computer and the community-currency management server computer replies that it is not possible to make a settlement, sends a reply that it is not possible to make a settlement to the settlement terminal, and
a transaction result processing device that, upon reception of a fact that a settlement has been made from the settlement-making-result notification device of the settlement terminal, sends information including an amount of a relevant transaction to the settlement authentication server computer and the community-currency management server computer, and
the settlement server enables to make a settlement in one transaction while combining a community currency and a legal currency with each other.

2. The settlement system according to claim 1, wherein
a transaction amount in one transaction or a balance in each account of the account-type community currency may have a negative value,
the community-currency management server computer further includes a transaction-amount-balance upper-limit monitoring device that monitors an upper limit of a transaction amount in one transaction or a lower limit and an upper limit of a balance in each account, and
when the authentication requesting device of the settlement server computer inquires the community-currency management server computer about a transaction of the community currency, the community-currency management server computer checks and replies not only identity verification of a customer but also whether the transaction reaches an upper limit of a transaction amount or of an account balance.

3. The settlement system according to claim 1, wherein
the settlement terminal is a settlement terminal as a dedicated product,
the settlement terminal further includes a facial recognition camera or an information-embedded graphics reading camera, and
the settlement terminal captures a face of a customer with the facial recognition camera or captures information-embedded graphics for identifying identity of the customer with the information-embedded graphics reading camera, regards captured information as identity verification information, and sends the identity verification information to the settlement server computer.

4. The settlement system according to claim 1, wherein
the settlement terminal is a smartphone installed in a shop of the goods seller or the service provider and having installed therein an application program enabling to make both a transaction of a community currency and a transaction of a legal currency, and
the settlement terminal uses a camera incorporated in the smartphone to capture a face of a customer or information-embedded graphics for identifying identity of the customer, regards captured information as identity verification information, and sends the identity verification information to the settlement server computer.

5. The settlement system according to claim 1, wherein
the settlement terminal is a smartphone of a customer having installed therein an application program enabling to make both a transaction of a community currency and a transaction of a legal currency, and
the settlement terminal uses a camera incorporated in the smartphone to capture information-embedded graphics for identifying a shop of the goods seller or the service provider, regards captured information as identity verification information, and sends the identity verification information to the settlement server computer.

6. The settlement system according to claim 1, wherein
the settlement terminal is a smartphone of a customer having installed therein an application program enabling to make a transaction of a community currency and also having installed therein an application program enabling to make a transaction of a legal currency, and
the settlement terminal uses a camera incorporated in the smartphone to capture information-embedded graphics for identifying a shop of the goods seller or the service provider, regards captured information as identity verification information, and sends the identity verification information to the settlement server computer.

7. The settlement system according to claim 1, wherein the zero-sum checking device of the community-currency management server computer calculates a sum of account balances at a constant cycle to check that the sum is zero, and when the sum is not zero, detects a transaction as a cause thereof, notifies a settlement server computer involved in the transaction of a fact that the sum is not zero, and requests a correction of the transaction.

8. The settlement system according to claim 1, wherein it is possible for members belonging to the community to download and install an account application program for checking a balance and a transaction history of a community currency owned by each individual in each individual's smartphone, and it is possible to perform transfer and reception of a community currency between the members using a relevant application.

9. The settlement system according to claim 1, wherein
the community-currency management server computer further includes a community-currency visualization device that recognizes a flow of a relevant community currency and visualizes the flow, and
as to between which members the community currency is often flowing to and from is made visible at first sight by the community-currency visualization device.

10. The settlement system according to claim 1, wherein the community currency functions as a discount right.

11. The settlement system according to claim 1, wherein it is possible to exchange the community currency between members belonging to a relevant community.
